Europäisches Patentamt

European Patent Office

Office européen des brevets

(11) Numéro de publication: **0 181 669**
**A1**

# (12) DEMANDE DE BREVET EUROPEEN

(21) Numéro de dépôt: 85201754.0

(22) Date de dépôt: 29.10.85

(51) Int. Cl.⁴: **A 61 C 1/08**

(30) Priorité: 07.11.84 FR 8417334

(43) Date de publication de la demande:
21.05.86 Bulletin 86/21

(84) Etats contractants désignés:
AT CH DE IT LI SE

(71) Demandeur: MICRO-MEGA
5-12 rue du Tunnel
F-25000 Besancon(FR)

(72) Inventeur: Garcia, Philippe
5, rue de la Mouillère
F-25000 Besancon(FR)

(72) Inventeur: Seigneurin, Michel
Saint-Cergues
F-74140 Douvaine(FR)

(72) Inventeur: Pernot, Jacques
Chemin de Merey Vieilley
F-25870 Geneuille(FR)

(74) Mandataire: Jörchel, Dietrich R.A. et al,
c/o BUGNION S.A. Conseils en Propriété Industrielle 10,
route de Florissant Case postale 375
CH-1211 Genève 12 Champel(CH)

(54) Pièce à main dentaire, notamment contre-angle.

(57) Le dispositif de réduction ou multiplication de vitesse de la pièce à main se présente sous la forme d'une unité modulaire (3) interchangeable comportant un arbre d'entrée (3b) formant l'arbre moteur. Le manche est constitué d'une douille intérieure (1) et d'une douille extérieure (2) s'emboîtant télescopiquement et mune de moyens (5 à 9) assurant leur verrouillage relatif en rotation et axial. L'unité modulaire (3) est emboitée dans l'extrémité antérieure de la douille intérieure (1). Lors du verrouillage, elle s'appuie avec son extrémité antérieure (3c) dans le sens axial contre un épaulement (2a) prévu à l'intérieur de la douille extérieure (2).

EP 0 181 669 A1

Fig. 2

## Pièce à main dentaire, notamment contre-angle.

L'invention concerne une pièce à main dentaire, notamment contre-angle, comprenant un manche composé de deux douilles fixées l'une à l'autre, un dispositif de réduction ou de multiplication de vitesse sous la forme d'une unité modulaire interchangeable logée dans ledit manche, une partie antérieure raccordée au manche et comportant un arbre et des moyens pour la fixation de l'outil, et un micromoteur qui entraîne cet outil par l'intermédiaire de l'unité modulaire et dudit arbre.

Ces pièces à main utilisées par les dentistes, notamment pour les opérations de fraisage, transmettent le mouvement de rotation d'un moteur à l'outil interchangeable, notamment à une fraise, et sont décrites par exemple dans les brevets français No 1 376 726 et 2 445 134. Dans le cas d'un contre-angle (par exemple brevet français No 2 445 134), le manche est suivi d'un bras oblique incliné d'environ 15° sur l'axe du manche et portant la tête, dans laquelle se loge la queue de l'outil.

Les travaux nécessitant la rotation d'instruments pour fraiser, aléser, remplir les canaux, etc. se font à des vitesses variant de 600 tours/minute environ jusqu'à 150.000 tours/minute. La vitesse de rotation des moteurs d'entraînement varie de 4.000 à 40.000 tours/minute. Il est donc nécessaire d'utiliser des pièces à main, soit réductrices, soit multiplicatrices.

Il est déjà connu d'avoir des pièces de transmission, avec des rapports de vitesse différents, sous la forme d'un bloc pouvant être inséré amoviblement dans le manche d'une pièce à main. Cependant, cette construction de pièce à main est assez compliquée parce que ces
pièces de transmission doivent être insérées dans le
manche par l'avant, après avoir déconnecté la pièce
antérieure. Par ailleurs, le bloc moteur doit être
inséré complètement dans le manche par l'arrière et en
outre il est nécessaire de prévoir une pièce
intermédiaire d'accouplement dont l'extrémité postérieure doit être connectée à une pièce d'alimentation.
Donc, le fait que dans le manche de la pièce à main
doivent être montés une pièce de transmission, le
moteur, et une pièce intermédiaire d'accouplement, ces
différents éléments internes rendent ce manche
compliqué et pas très maniable si l'on doit changer le
rapport de transmission.

La présente invention se propose de créer une pièce à
main dont la facilité de la construction permet de
disposer avec le même ensemble, composé du manche et de
la partie antérieure, d'une pluralité de trains
d'engrenages facilement interchangeables permettant
d'obtenir par un montage-démontage simple, la démultiplication ou la multiplication ou encore l'égalité de
transmission de la vitesse de rotation du moteur
d'entraînement de l'outil dentaire.

A cette fin, la pièce à main dentaire selon l'invention
est caractérisée selon la clause caractérisante de la
revendication 1.

Les principaux avantages présentés par cette pièce à
main résident dans l'interchangeabilité très facile et
simple des unités modulaires contenant chacune des
trains d'engrenages différents, dans la facilité de montage et de démontage qui permet un nettoyage complet. En effet, le manche ne contient que l'unité modulaire dont l'arbre d'entrée s'accouple directement à l'arbre du micromoteur, sans pièce intermédiaire, lorsque ledit micromoteur est accroché à l'extrémité postérieure du manche. Le même manche peut être utilisé avec différentes unités modulaires interchangeables de sorte qu'on limite le nombre de pièces à main ayant chacune un rapport de transmission différent.

Des formes d'exécution préférées de l'invention sont décrites dans les revendications dépendantes.

L'invention sera décrite dans la description qui suit de plusieurs formes d'exécution de pièces à main et au moyen des dessins annexés dans lesquels :

- La figure 1 est une vue générale éclatée d'une pièce à main, dans la forme d'un contre-angle,

- La figure 2 est une vue en coupe longitudinale selon II-II de la figure 3 du manche de la pièce à main selon une première forme d'exécution,

- La figure 3 est une vue selon la flèche III de la figure 2,

- La figure 4 est une coupe selon IV-IV de la figure 2 - position "déverrouillage",

- La figure 5 est une coupe selon V-V de la figure 2 - position "verrouillage",

- La figure 6 est une coupe selon VI-VI de la figure 2,

- La figure 7 est une vue partielle de la figure 2 - position "verrouillage".

- La figure 8 est un détail de principe de verrouillage.

- La figure 9 est une vue en coupe longitudinale d'une deuxième forme d'exécution d'un contre-angle,

- La figure 10 est une vue selon la flèche X de la figure 9 de la tête seule, avec la plaquette de fermeture enlevée,

- La figure 11 est une vue selon la flèche X de la figure 9 de la douille intérieure seule,

- La figure 12 est une vue selon la flèche XII de la figure 9,

- La figure 13 est un détail du raccordement électrique,

- La figure 14 est une vue de côté de la tête, partiellement en coupe pour illustrer des moyens d'éclairage,

- Les figures 15 à 17 illustrent schématiquement diverses possibilités d'unités modulaires,

- La figure 18 est une vue schématique d'une pièce à main à contre-angle équipée de l'unité modulaire,

- La figure 19 est une vue schématique d'une pièce à main droite équipée de l'unité modulaire,

- La figure 20 est une vue en coupe longitudinale partielle d'une autre forme d'exécution de l'unité modulaire,

- La figure 21 est une coupe selon XXI-XXI de la figure 20.

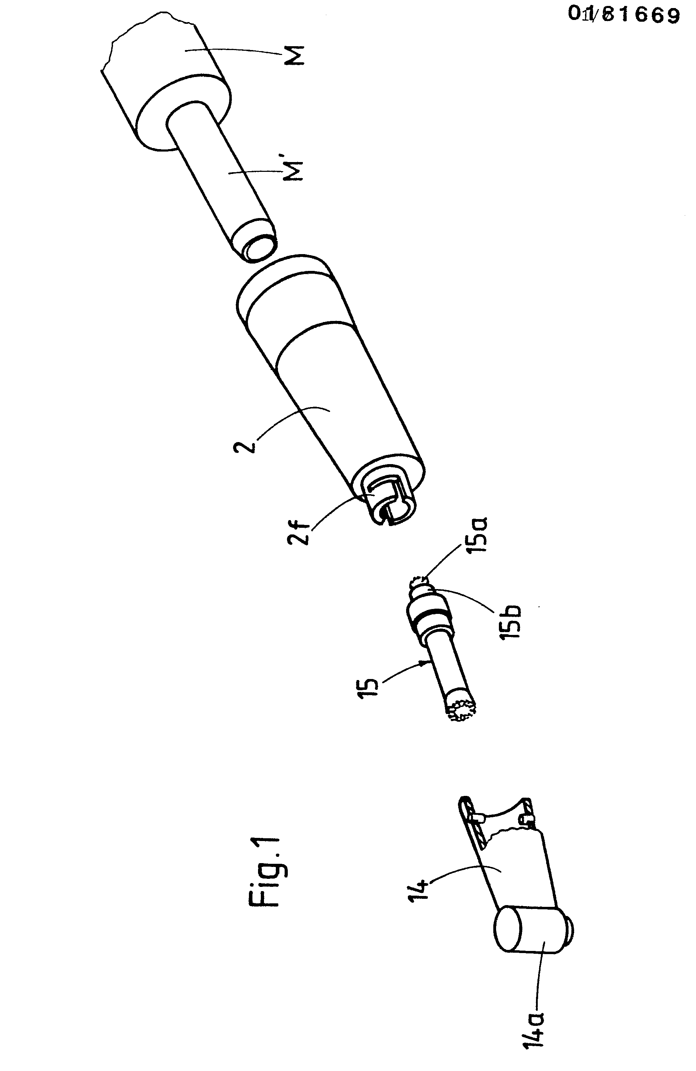

Selon une première forme d'exécution représentée sur les figures 1 à 8, la pièce à main dans la forme d'un contre-angle, est composée, de manière connue, d'un manche 2, d'une partie antérieure 14 comportant la tête 14a dans laquelle se fixe l'outil, non représenté, et un support interne 15 dans lequel est supporté l'arbre rotatif 15b avec son pignon 15a servant à entraîner l'outil. La partie postérieure du manche est conçue pour être raccordée amoviblement à un micromoteur M qui forme une pièce séparée du manche et connectable dans la prolongation de celui-ci. L'extrémité antérieure oblique 2f du manche est destinée à recevoir la partie antérieure 14 au moyen d'un accouplement à baïonnette connu, comme décrit par exemple dans le brevet FR 2 445 134 correspondant au brevet US 4 306 865.

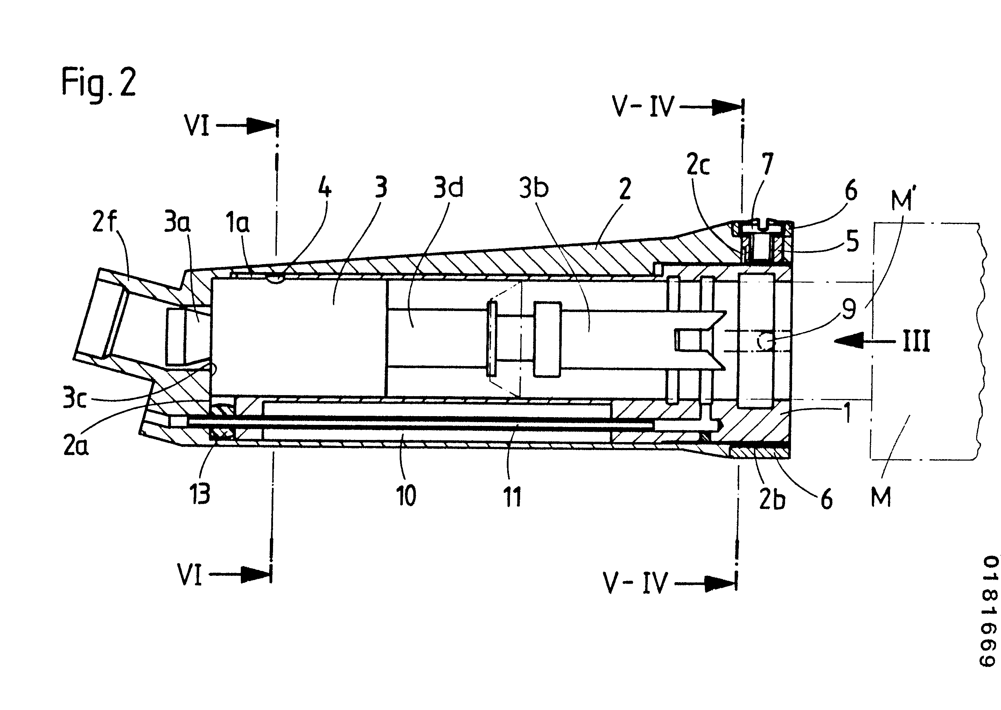

Le manche représenté en coupe longitudinale par la figure 2 se compose de deux douilles :

- Une douille intérieure 1 qui viendra s'emboîter sur le nez d'un moteur avec passage d'eau et d'air pour le refroidissement de l'outil ;
- Une douille extérieure 2, sur laquelle viendra s'emboîter la tête 14 du contre-angle.

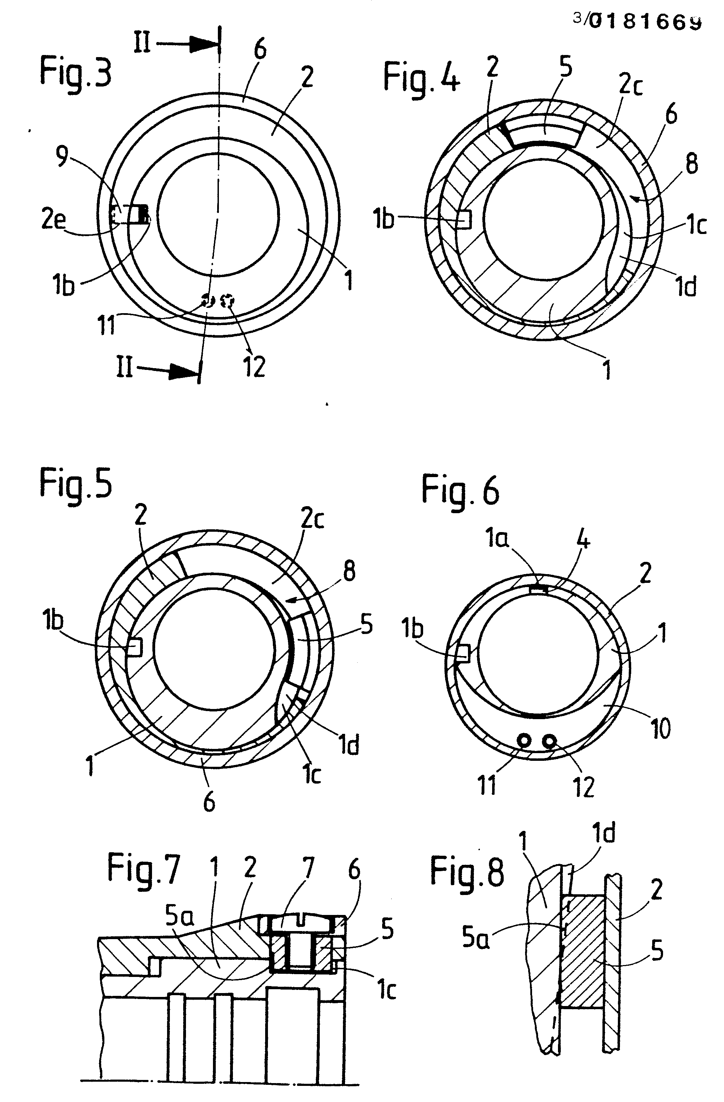

Ainsi que cela est visible sur les figures 3 à 6, la douille intérieure 1 est excentrée par rapport à son alésage axial et par rapport à la douille extérieure 2, il en résulte donc que la paroi de la douille intérieure 1 est plus épaisse d'un côté que de l'autre.

Une unité modulaire 3 contenant un train d'engrenages, soit multiplicateur, soit démultiplicateur, soit direct (1/1), est insérée dans l'alésage de la douille intérieure 2 et assure la transmission du mouvement de rotation, engendré par un moteur, à l'outil dentaire mis en place dans la tête de la pièce à main. Cette unité modulaire comporte un arbre d'entrée 3d et un arbre de sortie avec pignon 3a, ce dernier, dans l'état monté de la pièce à main, engrenant avec le pignon 15a de l'arbre rotatif 15b. L'arbre d'entrée 3d est destiné à s'accoupler amoviblement, d'une manière connue, à l'arbre d'un micromoteur M muni d'un nez M', et dans ce but son extrémité postérieure et munie d'une fourche 3b qui s'accouple à l'arbre moteur.

Cette untié modulaire 3 est emboîtée dans les deux douilles 1 et 2 et son positionnement dans ces douilles est obtenu à la fois :

- Par une clavette 4 en demi-lune fixée sur la périphérie de l'unité modulaire 3 à proximité de son extrémité antérieure et passant à travers une fente axiale 1a dans la paroi de la douille intérieure 1, à l'extrémité antérieure de celle- ci.

- Par une rainure longitudinale 1b fraisée sur toute la longueur de la douille intérieure 1 et coopérant avec une clavette 9 logée dans un trou 2e de la douille extérieure 2 à proximité de son extrémité postérieure : cette rainure 1b et cette clavette 9 servent donc de guides lors de l'emmanchement de la douille intérieure 1 dans la douille extérieure 2.

- Enfin, par l'action d'un taquet 5 muni d'une rampe latérale 5a, rendu solidaire d'une bague tournante 6 montée sur l'extrémité postérieure de la douille extérieure 2; ce taquet 5 agissant sur une rampe hélicoïdale 1d fraisée à proximité de l'extrémité postérieure de la douille intérieure 1, tel qu'une pression axiale soit créée sur l'ensemble, douille intérieure 1 - unité modulaire 3, de façon que la face antérieure 3c de l'unité modulaire 3, vienne buter contre un épaulement 2a de l'alésage de la douille extérieure 2.

La bague tournante 6 entoure l'extrémité de la douille extérieure 2, située du côté du nez du moteur, cette extrémité comportant un renflement dans lequel est décolletée une embase circulaire 2b.

Le taquet 5 fixé sur la bague 6 par la vis 7, est déplacé, par un mouvement de rotation partielle de la bague 6, dans un dégagement 8 en forme de segment annulaire formé par un évidement 1c à la périphérie extérieure de la douille intérieure 1 et un dégagement 2c de ladite embase 2b de la douille extérieure 2 se faisant vis-à-vis. Comme déjà mentionné, la douille intérieure 1 étant excentrée par rapport à la douille extérieure 2, donc par rapport à l'axe de rotation de la bague tournante 6, la profondeur du dégagement 2c dans la douille extérieure 2 diminue d'une manière continue, alors que l'évidement 1c sur la périphérie extérieure de la douille intérieure a une profondeur qui augmente continuellement à partir de la surface extérieure de la douille intérieure 1 de telle manière que la profondeur du dégagement 8 dans lequel se déplace le taquet 5 a une épaisseur constante, comme illustré figures 4 et 5. Ce taquet 5 peut donc glisser dans le dégagement 8 depuis la position de déverrouillage illustrée figure 4 dans laquelle il est complètement logé dans le dégagement 2c de la douille extérieure 2 jusqu'à la position de verrouillage, illustrée figure 5 dans laquelle il est engagé dans l'évidement 1c de la douille intérieure 1, la face de cet évidement 1c du côté de l'unité modulaire 3 présentant ladite rampe hélicoïdale 1d.

La douille intérieure 1 comporte, du côté où sa paroi est épaisse, un dégagement 10 qui a pour but de l'alléger et d'éviter les perçages très longs nécessaires au passage de l'eau et de l'air de refroidissement du fraisage. Les fluides air et eau sont véhiculés vers la tête par deux conduits 11 et 12 montés dans ce dégagement 10.

Sur la figure 2 on peut voir que la connexion entre les conduits d'eau et d'air disposés dans le manche et les conduits d'eau et d'air correspondants disposés dans le micromoteur, non représenté, est réalisée d'une manière connue par l'intermédiaire de deux gorges annulaires formées dans la paroi interne de la douille intérieure 1 et dans lesquelles débouchent respectivement les conduits d'eau et d'air 11 et 12 du manche et ceux du micromoteur lorsque ce dernier est raccordé au manche. On obtient ainsi un raccordement rotatif entre le manche et le micromoteur.

L'étanchéité de ces conduits côté tête est obtenue par la compression d'un joint 13 entre les deux douilles 1 et 2 entourant chaque conduit 11, 12.

Pour monter le manche et obtenir la compression du joint 13, on procède comme suit :

- On fait coulisser l'unité modulaire 3 dans l'avant de la douille intérieure 1 en faisant pénétrer la clavette 4 dans la fente axiale 1a de celle-ci pour la verrouiller en rotation.

- Dans la position de déverrouillage, illustrée figure 4, le taquet 5 de la bague 6 se trouvant, comme déjà mentionné, complètement logé dans la région extrême du dégagement 2c, région ayant la plus grande profondeur qui correspond à l'épaisseur dudit taquet, la face interne de celui-ci ne dépasse pas la périphérie interne de la douille extérieure 2. Dans cette position du taquet, on peut donc emboîter la douille intérieure 1 dans la douille extérieure 2, en introduisant la clavette 9 dans la rainure longitudinale 1b afin d'obtenir un verrouillage en rotation des deux douilles.

- Pour effecter le verrouillage axial des deux douilles on exerce une rotation partielle de la bague 6 qui fait déplacer le taquet 5 dans le dégagement 8 vers l'irtérieur de l'évidement 1c, la rampe 5a du taquet s'appuyant contre la rampe 1d de la douille ; cela crée une poussée axiale de verrouillage sur la douille intérieure 1 qui comprime le joint 13 jusqu'à ce que la face antérieure 3c de l'unité modulaire 3 vienne buter contre l'épaulement 2a de l'alésage de la douille extérieure 2.

La manoeuvre inverse déplace le taquet 5 dans le dégagement 8 de façon qu'il soit possible de sortir la douille intérieure 1 de la douille extérieure 2 et puis l'unité modulaire 3 de la douille intérieure 1 et de la remplacer par une autre unité modulaire, dans le même manche de pièce à main.

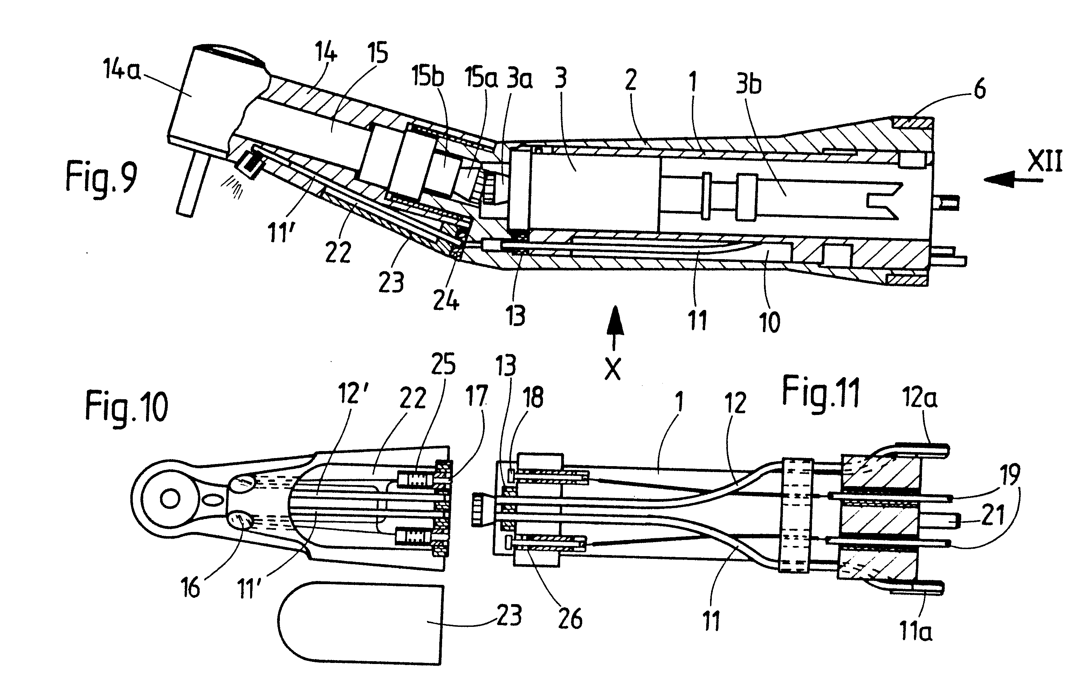

On se réfère maintenant aux figures 9 à 14 qui illustrent l'application du dispositif selon l'invention à un contre-angle muni d'autres moyens de connexion des conduits des fluides de refroidissement air et eau entre les extrémités du manche et le micromoteur d'une part et la partie antérieure d'autre part, ce contre-angle étant muni en outre de moyens d'éclairage de la place de travail. Une pièce à main de ce genre comportant des conduits pour le fluide de refroidissement et des conducteurs pour l'éclairage est connue en soi et de la demande de brevet EP numéro de publication 34 237.

La connexion des conduits 11, 12 se fait par un accouplement rigide avec fiches. Dans ce cas, la configuration des douilles interne 1 et externe 2, de l'unité modulaire 3, et de leurs systèmes de verrouillage, bague 6, etc, ainsi que de la partie antérieure 14 avec son support interne 15 et son arbre 15b, reste inchangée.

Les conduits d'air 12 et d'eau 11 sortent à l'extrémité postérieure du manche dans des fiches 11a, 12a faisant saillie et destinées à être raccordées aux orifices de sortie des canaux correspondant venant du micromoteur. A l'extrémité antérieure du manche, les conduits 11, 12 sont raccordés respectivement aux conduits 11' 12' disposés dans la partie antérieure et l'étanchéité est réalisée, comme dans la forme d'exécution précédente, grâce aux joints 13 comprimés entre les douilles 1 et 2 ainsi que grâce aux joints 24 sur les faces de contact.

Le dispositif d'éclairage de la place de travail est réalisé par deux ampoules 16 logées dans la partie antérieure adjacente à la tête et connectées par des conducteurs à des fiches 17 tenues par un ressort-boudin 25. Lorsque la partie antérieure est montée sur le manche, ces fiches assurent le contact, par l'intermédiaire de pièces de raccordement conductrices 20 logées dans la douille 2, avec des fiches correspondantes 18 également tenues par un ressort-boudin 26, ces ressorts étant comprimés lors du montage. Ces fiches 18 sont montées dans la paroi épaisse de la douille intérieure 1 et reliées par des conducteurs à des fiches de sortie 19 faisant saillie à l'extrémité postérieure de la douille et destinées à coopérer avec des prises correspondantes sur le micromoteur. Il est également prévu une prise de terre 21. Les conducteurs, comme les conduits d'alimentation en fluide sont logés dans le dégagement 10 de la douille intérieure 1 et dans un dégagement 22 de la partie antérieure 14, ce dernier étant fermé par une plaque 23. Du fait que ces divers branchements à l'extrémité postérieure du manche, on obtient un raccordement rigide entre la pièce à main et le micromoteur.

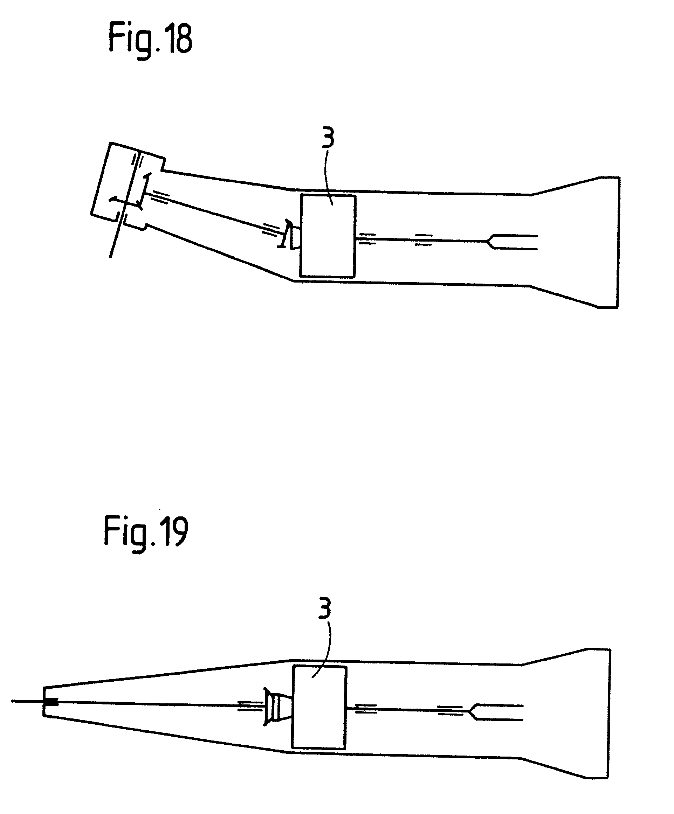

L'invention s'applique en premier lieu aux contre-angles tels que décrits précédemment et illustrés schématiquement figure 18, mais en principe il est également possible de l'appliquer aux pièces à main droites telles qu'illustrées figure 19.

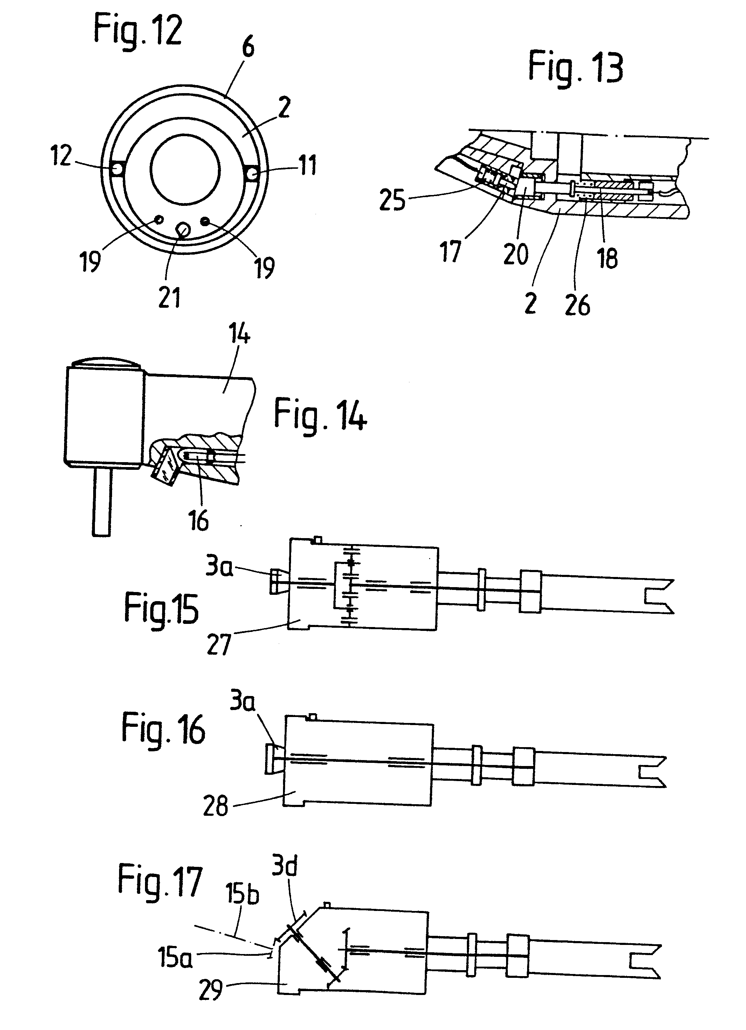

L'unité modulaire interchangeable 3 peut être du type de celle, 27, illustrée figure 15, correspondant à un planétaire réducteur tel que décrit dans le brevet français N° 2 383 361, correspondant au brevet américain N° 4 306 865, ou de celle, 28, illustrée figure 16 correspondant à un rapport direct 1/1 ou enfin de celle, 29, illustrée figure 17 correspondant à un multiplicateur avec axe oblique faisant l'objet d'une demande de brevet parallèle; dans ce cas c'est le pignon de sortie 3d du multiplicateur qui engrène avec le pignon 15a de l'arbre 15b.

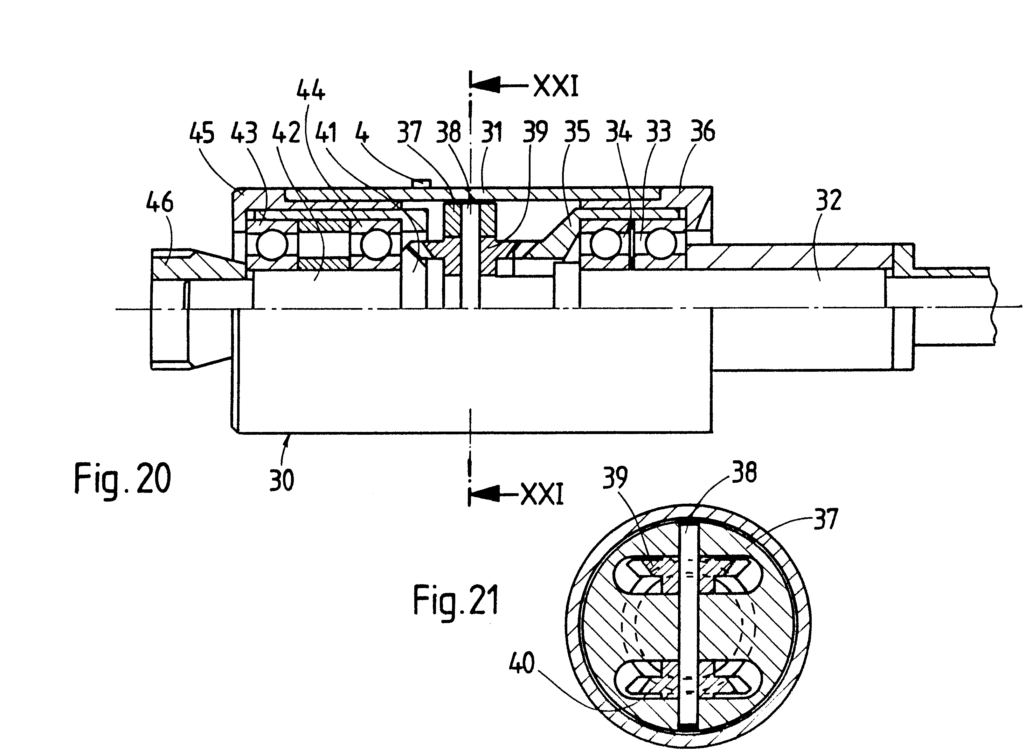

Sur les figures 20 et 21, est illustré un autre exemple de réalisation de l'unité modulaire formant multiplicateur. Dans ce cas, le module de transmission 30 comporte, à l'intérieur d'une douille 31 formant un corps entretoise et munie d'une clavette 4 pour assurer son positionnement dans la fente 1a de la douille intérieure du manche dans lequel elle sera montée, un train d'engrenages permettant selon la configuration de celui-ci des multiplications différentes, de la vitesse du moteur d'entraînement, pour que l'outil placé dans la tête de la pièce à main puisse être entraîné avec une vitesse correspondante plus grande.

Le train d'engrenages se compose essentiellement d'un arbre d'entrée 32 dans l'axe longitudinal de la douille 31, relié au moteur par un accouplement connu. Cet arbre 32 est supporté par deux paliers 33, 34 formés par des roulements à billes, représentés sur la figure 20, dont les cages extérieures sont chassées dans une couronne dentée 35, elle-même chasséedans un bouchon 36 chassé lui aussi dans la douille 31 du module.

L'arbre d'entrée 32 se termine, à l'opposé de l'accouplement avec le moteur, par un disque plein 37 porteur selon son diamètre d'un arbre 38 transversal perpendiculaire à l'arbre d'entrée 32 entraînant deux pignons satellites 39 et 40 tournant fous sur cet arbre 38 et s'engrenant d'une part sur la couronne dentée 35 et, d'autre part, sur une roue dentée 41, fixée sur l'arbre de sortie 42.

Cet arbre de sortie 42 est supporté par deux paliers 43, 44 formés par des roulements à billes, tenus dans un autre bouchon 45 chassé dans le corps entretoise 31 du module. Un pignon 46 chassé sur l'arbre de sortie 42 transmet la rotation à l'arbre de la tête.

Une variation du rapport de transmission est obtenue par la mise en place du pignon satellites 39 et 40 de diamètres différents, l'un s'engrenant sur la couronne 35, l'autre s'engrenant sur la roue dentée 41 de plus petit diamètre.

L'invention n'est bien entendu pas limitée aux formes d'exécution décrites mais peut faire l'objet de diverses variantes, notamment en ce qui concerne le mode de verrouillage de l'unité modulaire 3, dans la douille intérieure 1. Ce verrouillage peut par exemple être assuré par un filetage ménagé sur l'unité modulaire, en particulier à son extrémité postérieure et qui coopère avec un filetage correspondant dans l'alésage de la douille intérieure.

Naturellement, on peut également prévoir d'autres unités modulaires, en particulier un module très compact, muni d'un axe oblique, tel que décrit dans la demande de brevet français parallèle No 8417335. L'arbre d'entrée de cette unité modulaire, comme celui des autres unités modulaires décrites, est adapté à être entraîné directement, sans aucune pièce intermédiaire, au micromoteur, lequel s'accroche d'une manière connue en soi à l'extrémité postérieure du manche.

0181669

REVENDICATIONS.

1. Pièce à main dentaire, notamment contre-angle, comprenant un manche composé de deux douilles fixées l'une à l'autre, un dispositif de réduction ou de multiplication de vitesse sous la forme d'une unité modulaire interchangeable logée dans ledit manche, une partie antérieure raccordée au manche et comportant un arbre et des moyens pour la fixation de l'outil, et un micromoteur qui entraine cet outil par l'intermédiaire de l'unité modulaire et dudit arbre, caractérisée par le fait que les deux douilles forment une douille intérieure (1) et d'une douille extérieure (2) qui s'emboîtent télescopiquement et sont munies des moyens (5 à 9) assurant leur verrouillage relatif en rotation et axial, lesdits moyens pour le verrouillage axial se trouvant à leurs extrémités postérieures, que l'unité modulaire (3) est insérable depuis l'extrémité postérieure du manche jusqu'à une position dans laquelle elle se trouve emboîtée dans la partie antérieure du manche, verrouillée en rotation et s'appuyant avec son extrémité antérieure (3c) dans le sens axial contre un épaulement (2a) prévu à l'intérieur de la douille extérieure (2), que l'extrémité postérieure du manche est conçue pour être connectée amoviblement au micromoteur qui forme une pièce séparée du manche et connectable dans la prolongation de celui-ci et que ledit module comporte un arbre d'entrée qui s'étend dans le manche du côté de l'extrémité postérieure et s'accouple directement audit micromoteur quand celui-ci est connecté.

2. Pièce à main dentaire selon la revendication 1, caractérisée par le fait que les moyens de verrouillage axial des deux douilles (1, 2) comprennent une bague tournante (6) entourant une embase (2b) de l'extrémité postérieure de la douille extérieure (2), un dégagement (8) en forme de segment annulaire formé par un dégagement (2c) dans ladite embase (2b) et, faisant face à celui-ci, un évidement (1c) sur la périphérie extérieure de la douille intérieure (1), cette périphérie étant exentrique par rapport à l'axe de rotation de la bague tournante (6) et ledit évidement (1c) étant fraisé de façon que sa face du côté de l'unité modulaire (3) présente une rampe hélicoïdale (1d), un taquet (5) fixé sur la paroi intérieure la bague tournante (6) et pouvant coulisser lors de la rotation de la bague (6) dans ledit dégagement (8) et présentant sur une face parallèle à un plan radial une rampe (5a) destinée à collaborer avec celle (1d) de la douille intérieure (1) et assurer le verrouillage axial relatif de deux douilles (1, 2).

3. Pièce à main dentaire selon la revendication 1 ou 2, caractérisée par le fait que les moyens de verrouillage des deux douilles en rotation comprennent une clavette (9) disposée dans un trou (2e) de la douille extérieure (2) et se projetant radialement vers l'intérieur d'une rainure longitudinale (1b) sur la périphérie de la douille intérieure (1).

4. Pièce à main dentaire selon l'une quelconque des revendications 1 à 3, caractérisée par le fait que les moyens de verrouillage de l'unité modulaire (3) consistent en une clavette (4) solidaire dudit élément modulaire (3) et coopérant avec une fente axiale (1a) de l'extrémité antérieure de la douille intérieure (1).

5.   Pièce   à   main   dentaire  selon  l'une  quelconque  des
revendications  1  à  3,  caractérisée  par  le  fait  que   les
moyens    de    verrouillage   de   l'unité   modulaire   (3)
consistent   en   une   portion   filetée   formée   sur    la
périphérie   de   l'unité  modulaire  (3)  et  coopérant  avec
un  filetage  complémentaire  formé  à  l'intérieure  de   la
douille  intérieure.

6.   Pièce   à   main   dentaire  selon  l'une  quelconque  des
revendications   1   à   5,   ayant   des   conduits   pour   des
fluides   de   refroidissement,   caractérisée  par  le  fait
que   la   douille   intérieure   (1)   est   excentrique   par
rapport   à   son   alésage  qui  contient  l'unité  modulaire
(3)  et  par  rapport  à  la  douille  extérieure  2   et   qu'un
passage   (10)   est  prévu  entre  les  deux  douilles  (1,  2)
dans  lequel  lesdit  conduits  (11,   12)   sont   logés   et
qu'un   joint  d'étanchéité  (13)  entourant  chaque  conduit
(10,   11)   est   comprimé  axialement  entre  les   deux
douilles  montées  (1,   2)   à  l'extrémité  antérieure  de
celles-ci.

7.  Pièce  à  main   dentaire   selon   la   revendication   6,
caractérisée   par  le  fait  qu'il  est  prévu  des  fiches  de
connexion  (11a,  12a)  pour  relier  les  conduits  (11,   12)
aux  conduits  correspondants  du  moteur.

8.   Pièce   à   main   dentaire   selon  la  revendication  1,
munie  de  moyens  d'éclairage  de  la  place  de   traitement,
caractérisée   par   le   fait   qu'il  est  prévu  d'une  part
entre  la  partie  antérieure  (14)  et  le  manche  des  fiches
de   connexion   (17,  18)  soumises  à  l'action  de  ressorts
boudin  (25,  26)  et  qui  assurent   le   contact,   dans   la
position  montée  de  la  pièce  à  main,  par  l'intermédiaire
de  pièces  de  raccordement  (20)  logées  dans   la   douille extérieure (2) et d'autre part, entre le manche et le micromoteur, des fiches de connexion (19) faisant saillie à l'extrémité de la douille interne.

9. Pièce à main dentaire selon l'une quelconque des revendications 1 à 3, caractérisée par le fait que le dispositif de réduction ou multiplication de vitesse comporte une douille (31) creuse ayant à chaque extrémité un bouchon (36, 45), le bouchon (36) porte un palier (33, 34) pour l'extrémité antérieure de l'arbre d'entrée (32) et l'autre bouchon (45) porte un palier (43, 44) pour l'arbre de sortie (42), que l'arbre d'entrée (32) est muni à son extrémité située à l'intérieur de la douille (31) d'un axe transversal (38) s'étendant de part et d'autre de cet arbre d'entrée (32), préférablement logé dans un disque (37) fixé sur l'arbre d'entrée (32) et portant deux pignons (39, 40) disposés de part et d'autre de l'arbre d'entrée (32) de sorte qu'ils tournent librement sur ledit axe transversal (38) et que ces pignons (39, 40) engrènent d'une part avec une roue dentée (35) fixe, concentrique à l'arbre d'entrée (32) et d'autre part avec une seconde roue dentée (41) solidaire de l'arbre de sortie (42).

Fig.1

14
14a
15
15b
15a
2
2f
M'
M

01/81669

# Fig. 2

Fig.3

Fig.4

Fig.5

Fig.6

Fig.7

Fig.8

Fig.9

Fig.10

Fig.11

XII

X

6, 3b, 1, 2, 3, 3a, 15a, 15b, 15, 14, 14a, 11', 22, 23, 24, 13, 10, 11

19, 21, 12a, 11a, 12, 11, 1, 18, 26, 13, 25, 17, 22, 12', 11', 16, 23

Fig.12

Fig.13

Fig.14

Fig.15

Fig.16

Fig.17

Fig.18

3

Fig.19

3

Fig. 20

Fig. 21

0181669

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl 4) |
|---|---|---|---|
| Y | GB-A-2 118 837 (G. LOHN)<br><br>* Page 2, lignes 97-106; figures 1 et 4 * | 1,2,5,6 | A 61 C 1/08 |
| Y | GB-A- 413 533 (F. DURFEY)<br><br>* Page 1, lignes 10-19; figure 4 * | 1,2,5,6 | |
| A | ENGINEERING, vol. 214, no. 11, novembre 1974, pages 920-921; H. CONWAY: "Fixing a wheel"<br>* Figures 2 et 4 * | 3,4 | |
| A | EP-A-0 034 237 (D. MOSIMANN)<br>* Page 8, lignes 24-32; figures 1 et 4 * | 7,8 | DOMAINES TECHNIQUES RECHERCHES (Int Cl.4) |
| A | FR-A-2 383 361 (MICRO-MEGA)<br>* Figures 1 et 2 * | 9 | A 61 C<br>F 16 H<br>F 16 L<br>F 16 B<br>A 61 C |
| A | FR-A-2 530 454 (MICRO-MEGA)<br>* Figure 1 * | 9 | |
| P,A | FR-A-2 560 765 (MICRO-MEGA)<br>* Figures 1a et 1b * | 1 | |

Le présent rapport de recherche a été établi pour toutes les revendications

| Lieu de la recherche | Date d'achèvement de la recherche | Examinateur |
|---|---|---|
| LA HAYE | 07-02-1986 | EHRSAM F.J.A. |